# EUROPÄISCHE PATENTSCHRIFT

(11) **EP 2 639 049 B1**
(45) Veröffentlichungstag und Bekanntmachung des Hinweises auf die Patenterteilung: **14.10.2015**
(21) Anmeldenummer: 13159446.7
(22) Anmeldetag: 15.03.2013
(51) Int. Cl.: B29C 70/38

(54) **Faser-Legevorrichtung**
Fibre laying device
Dispositif de pose de fibres

(30) Priorität: 15.03.2012 DE 102012102205
(43) Veröffentlichungstag der Anmeldung: 18.09.2013
(73) Patentinhaber: Deutsches Zentrum für Luft- und Raumfahrt e.V., 51147 Köln (DE)
(72) Erfinder: Krombholz, Christian, 21614 Buxtehude (DE); Perner, Marcus, 38118 Braunschweig (DE); Röstermundt, Dirk, 31224 Peine (DE); Bock, Matthias, 38102 Braunschweig (DE)
(74) Vertreter: Aisch, Sebastian

(56) Entgegenhaltungen:
- EP-A1- 1 533 107
- WO-A1-2011/134994
- JP-A- S62 144 927

## Beschreibung

Die Erfindung betrifft eine Faser-Legevorrichtung zur Herstellung eines Fasergeleges eines Faserverbundbauteils, mit einem Werkzeug zum Ablegen von Faserbahnen und einem Ablegekopf, der zum Legen von Faserbahnen auf dem Werkzeug ausgebildet ist. Die Erfindung betrifft ebenso ein Herstellungsverfahren hierzu.

Bei der Fertigung von Großbauteilen aus Faserverbundwerkstoffen kommen zur Herstellung eines Fasergeleges auf einem Formwerkzeug große Portalanlagen zum Einsatz, die aus dem Stand der Technik bekannt sind. Auf einem Faserspulensystem sind die Faserbahnen, meist Tapes oder Tows genannt, angeordnet, die über einen Ablegekopf auf dem Werkzeug abgelegt werden, um die geometrische Form des herzustellenden Faserverbundbauteils aus mehreren Laminatschichten zu bilden. Je nach Größe der Portalanlage ist es nicht selten, dass sowohl der Ablegekopf als auch die mitzuführenden Materialspulen die Dimension eines Kleinwagens mit häufig über einer Tonne Gewicht haben. Aufgrund der hohen Masse und der großen Ausdehnung sind die Beweglichkeit und die kinematischen Abläufe in ihrer Dynamik begrenzt.

Die Planung der Legepositionen der einzelnen Faserbahnen auf dem Werkzeug wird in einer Offline-Programmierung simuliert und generiert. Anschließend werden die Faserbahnen entlang der aus der Offline-Programmierung generierten Positionen abgelegt, wobei es aufgrund der Größe und des Gewichtes der eingesetzten Portalanlagen zu Prozessungenauigkeiten kommen kann, die zu einer ungenauen Ablage der Faserbahnen auf dem Werkzeug führen. Insbesondere bei der Herstellung von sicherheitskritischen Großbauteilen kann ein zu großer, unerwünschter Abstand zwischen zwei benachbarten Faserbahnen zu einem Ausschuss und somit zu einer Kostensteigerung des Herstellungsprozesses führen.

Dabei spielt sowohl die Stärke als auch die Verteilung des Anpressdruckes über die Anpressrolle des Ablegekopfes beim Legen der Faserbahnen auf das Werkzeug eine nicht unerhebliche Rolle. Es hat sich gezeigt, dass aufgrund der Größe und des Gewichtes der verwendeten Portalanlagen sowohl der Anpressdruck als auch die Anpressdruckverteilung beim Legen derart schwankt, dass es teilweise zu nicht mehr reproduzierbaren Qualitäten bei der Herstellung der Bauteile kommen kann. So kann eine zu hohe Anpresskraft in bestimmten Bereichen der Faserbahnen dazu führen, dass aufgrund der starken Kompaktierung in diesem Bereich eine Beschädigung der Fasern oder der Faser-Matrix-Haftung bewertet, was zu Fehlstellen innerhalb des Bauteils führt. JP-A-562 144 927 offenbart eine Faser-Legevorrichtung gemäß dem Oberbegriff des Anspruchs 1.

Es ist daher Aufgabe der vorliegenden Erfindung, eine Faser-Legevorrichtung und ein entsprechendes Herstellungsverfahren anzugeben, mit dem die Prozesssicherheit und Prozessgenauigkeit bei der Herstellung von Großbauteilen aus Faserverbundwerkstoffen erhöht werden kann.

Die Aufgabe wird mit einer Faser-Legevorrichtung gemäß den Merkmalen des Anspruchs 1.

Es wird somit vorgeschlagen, mit Hilfe einer entsprechenden Kraftsensorik die Richtung der momentanen Anpresskraft beim Legen der Faserbahn zu ermitteln und mittels einer Regelungsvorrichtung dazu zu nutzen, die Anpresskraft bezüglich der Richtung während des Legens der Faserbahnen entsprechend einer vorgegebenen Soll-Anpresskraft zu regulieren bzw. zu regeln. Dadurch kann eine konstante Anpresskraft und Anpresskraftverteilung über den gesamten Herstellungsprozess realisiert werden, insbesondere auch bei großen Portalanlagen oder Roboteranlagen, die systemimmanent eine größere Prozessungenauigkeit bei der Ablage der Faserbahnen aufweisen.

Unter einer Faserbahn wird ein flächiges Faserhalbzeug verstanden, dass auf einem Werkzeug ablegbar ist und somit in mehreren Laminatschichten das Faserbauteil bilden kann.

Durch die Ermittlung der Richtung der wirkenden Anpresskraft kann darüber hinaus verhindert werden, dass beispielsweise aufgrund einer nicht gleichmäßigen Kräfteverteilung beim Legen der Faserbahnen es zu Materialkompaktierungen oder Stauchungen kommt, die beim späteren Bauteil zu Fehlstellen führen.

Ein enormer Vorteil gegenüber gängigen Legevorrichtungen besteht damit darin, dass eine Korrektur bzw. Regelung während der Ablage der Faserbahnen unter Berücksichtigung der Material- und Prozessanforderungen realisiert werden kann. Insbesondere bei der Verwendung drucklabiler Materialien, wie beispielsweise Schäume und Wabenstrukturen, auf denen die Faserbahnen abgelegt werden sollen, kann mittels der Anpresskraft-Regelung ein Defekt durch eine zu große Anpresskraft vermieden werden.

Ein weiterer Vorteil besteht darüber hinaus darin, dass mit Hilfe dieser vorgeschlagenen Regelung der Anpresskraft eine im Wesentlichen konstante Anpresskraft während der Ablage der Faserbahnen erreicht werden kann, was die Prozessqualität der Ablage wesentlich erhöht.

Die Anpresskraft-Erfassungsvorrichtung ist ausgebildet, ein Neigungsmoment des Ablegekopfes zu erfassen und basierend darauf dann die Richtung der Ist-Anpresskraft aus dem Neigungsmoment zu ermitteln. Ein solches Neigungsmoment kann beispielsweise mit Hilfe von Beschleunigungssensoren oder internen Maschinendaten ermittelt werden.

Zusätzlich dazu kann die Anpresskraft-Erfassungsvorrichtung derart ausgebildet sein, dass sie einen Neigungswinkel des Ablegekopfes gegenüber der Werkzeugoberfläche erfassen kann und basierend darauf dann die Richtung der Ist-Anpresskraft aus dem Neigungswinkel ermitteln kann. Vorteilhafterweise ist die Anpresskraft-Erfassungsvorrichtung derart ausgebildet, dass sie die Stärke der Ist-Anpresskraft, die beim Legen der Faserbahn durch den Ablegekopf auf die Faserbahn wirkt erfassen kann. Die Regelungsvorrichtung ist dann weiterhin ausgebildet, die Stärke der auf die Faserbahn wirkenden Anpresskraft beim Legen der Faserbahn in Abhängigkeit von der erfassten Stärke der Ist-Anpresskraft und einer vorgegebenen Soll-Anpresskraft zu regeln.

In einer vorteilhaften Ausführungsform weist der Ablegekopf eine Anpressrolle zum Legen der Faserbahn auf dem Werkzeug auf und hat zumindest einen Kraftsensor zum Erfassen der Stärke der Ist-Anpresskraft, der zwischen Anpressrolle und Ablegekopf angeordnet ist. Hierdurch lässt sich die Stärke der Anpresskraft ohne großen Einfluss der Anlagendynamik, insbesondere der Länge der kinematischen Kette und der äußeren Kräfte, ermitteln.

Wie bereits angedeutet, ist es im Übrigen auch ganz besonders vorteilhaft, wenn der Ablegekopf eine Anpressrolle zum Legen der Faserbahn auf dem Werkzeug hat und die Regelungsvorrichtung zum Regeln der Richtung der Anpresskraft derart eingerichtet ist, dass eine im Wesentlichen gleichmäßige Anpresskraftverteilung auf der Anpressrolle erreicht wird. Hierdurch können insbesondere Materialstauchungen quer zur Ablegerichtung vermieden werden.

Die Aufgabe wird im Übrigen auch mit einem Verfahren gelöst zum Herstellen eines Fasergeleges eines Faserverbundbauteils gemäß den Merkmalen des Anspruchs 7.

Vorteilhafte Ausgestaltungen dieses Verfahrens finden sich in den entsprechenden Unteransprüchen.

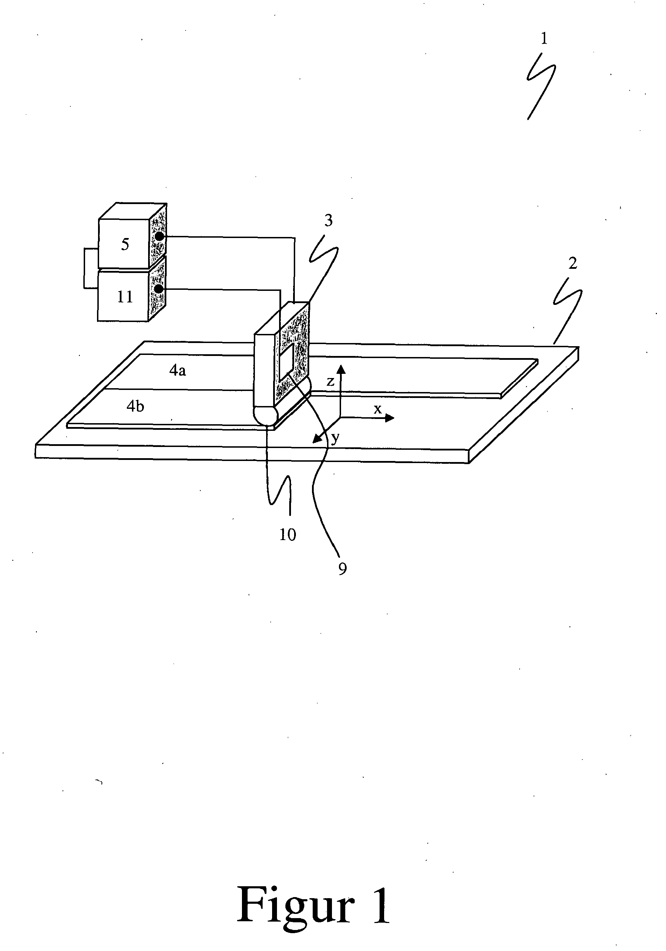

Die Erfindung wird anhand der beigefügten Figur beispielhaft erläutert. Es zeigt
- Figur 1: - schematische Darstellung der erfindungsgemäßen Faser-Legevorrichtung.

Figur 1 zeigt schematisch die erfindungsgemäße Faser-Legevorrichtung 1 mit einem Werkzeug 2, auf dem mit Hilfe eines Ablegekopfes 3 Faserbahnen 4a, 4b gelegt werden können. Bei vielen Portalsystemen und Robotersystemen wird der Ablegekopf der Legevorrichtung auch Endeffektor genannt.

Das Werkzeug 2 ist ein Formwerkzeug, welches die spätere Geometrie des Fasergeleges, das sich aus den abgelegten Faserbahnen 4a, 4b (und weiteren nicht dargestellten) ergibt, definiert.

Der Ablegekopf 3 bzw. Endeffektor kann an einer großen Portalanlage oder Roboteranlage (nicht dargestellt) angeordnet sein, die so ausgebildet ist, dass der Ablegekopf 3 über dem Werkzeug 2 an vorbestimmten Legepositionen gebracht und die Faserbahnen somit an ihren definierten Legepositionen auf dem Werkzeug 2 abgelegt werden können. Denkbar ist aber auch, dass der Endeffektor 3 starr angeordnet ist und das Werkzeug 2 auf einem bewegbaren Untergrund derart angeordnet ist, dass durch eine Verschiebung in X- bzw. Y-Richtung die gewünschte Legeposition einstellbar ist.

Hierfür ist eine Steuereinheit 5 vorgesehen, die zum Ansteuern der Faser-Legevorrichtung so ausgebildet ist, dass an vorbestimmten Legepositionen die Faserbahnen 4a, 4b durch den Ablegekopf auf dem Werkzeug abgelegt werden. Im Ausführungsbeispiel der Figur 1 ist der Ablegekopf 3 über eine entsprechende Steuerkette mit der Steuereinheit 5 verbunden, um an vorbestimmten Legepositionen die Faserbahnen durch den Ablegekopf 3 auf dem Werkzeug 2 abzulegen. Hierfür kann, wie bereits erwähnt, beispielsweise der Ablegekopf in X- und Y-Richtung sowie in Z-Richtung verfahren werden.

Der Ablegekopf 3 weist in dem Ausführungsbeispiel der Figur 1 entsprechende Kraft- und Momentsensoren 9 als Anpresskraft-Erfassungsvorrichtung auf, mit denen die Anpresskraft in Bezug auf die Stärke und/oder Richtung ermittelt werden kann. So weist der Ablegekopf 3 am unteren Ende eine Anpressrolle 10 auf, mit der die abzulegenden Faserbahnen auf das Werkzeug 2 mit einer vorbestimmten Anpresskraft abgelegt werden sollen. Mit Hilfe der Kraft- und Momentsensoren 9 kann die Stärke der Anpresskraft erfasst werden, die momentan beim Ablegen der Faserbahn 4b auf die Faserbahn 4b wirkt. Darüber hinaus kann mit Hilfe einer Momentsensorik 9 die Momente um die X-Achse und die Y-Achse gemessen werden. Zusätzlich hierzu kann auch ein Neigungswinkel des Ablegekopfes 3 gegenüber dem Werkzeug 2 ermittelt werden.

Die Kraft- und/oder Momentsensoren 9 sind mit einer Regelungsvorrichtung 11 verbunden, die in Abhängigkeit der ermittelten Stärke und/oder Richtung der gemessenen Ist-Anpresskraft und einer vorgegebenen Stärke und/oder Richtung einer Soll-Anpresskraft den Ablegekopf 3 so ansteuert, dass die gewünschte Anpresskraft bezüglich Stärke und/oder Richtung eingestellt wird. So kann beispielsweise der Ablegekopf 3 um die X-Achse oder die Y-Achse gedreht werden, um eine möglichst gleichmäßige Anpresskraftverteilung auf der Anpressrolle 10 zu erreichen. Durch ein Verfahren in Z-Richtung lässt sich darüber hinaus die entsprechende Stärke der Anpresskraft regulieren und an die gewünschte Soll-Anpresskraft anpassen.

Hierdurch ist eine material- und prozessoptimierte Ablage zur Fertigung von Faserverbundbauteilen in der Fiber Placement und Tape Laying Technology möglich.

## Patentansprüche

1. Faser-Legevorrichtung (1) zur Herstellung eines Fasergeleges eines Faserverbundbauteils, mit
- einem Werkzeug (2) zum Ablegen von Faserbahnen (4a, 4b),
- einem Ablegekopf (3), der zum Legen von Faserbahnen (4a, 4b) auf dem Werkzeug (2) mit einer Anpresskraft ausgebildet ist,
- eine Anpresskraft-Erfassungsvorrichtung (9), die zum Erfassen der Richtung einer Ist-Anpresskraft, die beim Legen der Faserbahn (4b) durch den Ablegekopf (3) auf die Faserbahn (4b) wirkt, ausgebildet ist, und
- eine Regelungsvorrichtung (11) vorgesehen ist, die zum Regeln der Richtung der auf die Faserbahn (4b) wirkenden Anpresskraft beim Legen der Faserbahn (4b) in Abhängigkeit von der erfassten Richtung der Ist-Anpresskraft und der Richtung einer vorgegebenen Soll-Anpresskraft ausgebildet ist,
**dadurch gekennzeichnet, dass**
- die Anpresskraft-Erfassungsvorrichtung (9) zum Erfassen eines Neigungsmomentes des Ablegekopfes (3) und zum Ermitteln der Richtung der Ist-Anpresskraft aus dem erfassten Neigungsmoment eingerichtet ist.

2. Faser-Legevorrichtung (1) nach Anspruch 1, **dadurch gekennzeichnet, dass** die Anpresskraft-Erfassungsvorrichtung (9) zum Erfassen der Stärke der Ist-Anpresskraft, die beim Legen der Faserbahn (4b) durch den Ablegekopf (3) auf die Faserbahn (4b) wirkt, und die Regelungsvorrichtung (11) zum Regeln der Stärke der auf die Faserbahn (4b) wirkenden Anpresskraft beim Legen der Faserbahn (4b) in Abhängigkeit von der erfassten Stärke der Ist-Anpresskraft und der vorgegebenen Soll-Anpresskraft ausgebildet ist.

3. Faser-Legevorrichtung (1) nach Anspruch 2, **dadurch gekennzeichnet, dass** der Ablegekopf (3) eine Anpressrolle (10) zum Legen der Faserbahn (4b) auf dem Werkzeug (2) hat und zumindest ein Kraftsensor zum Erfassen der Stärke der Ist-Anpresskraft zwischen Anpressrolle und Ablegekopf (3) angeordnet ist.

4. Faser-Legevorrichtung (1) nach einem der vorhergehenden Ansprüche, **dadurch gekennzeichnet, dass** die Anpresskraft-Erfassungsvorrichtung (9) zum Erfassen eines Neigungswinkels des Ablegekopfes (3) gegenüber der Oberfläche des Werkzeugs (2) und zum Ermitteln der Richtung der Ist-Anpresskraft aus dem erfassten Neigungswinkel eingerichtet ist.

5. Faser-Legevorrichtung (1) nach einem der vorhergehenden Ansprüche, **dadurch gekennzeichnet, dass** der Ablegekopf (3) eine Anpressrolle (10) zum Legen der Faserbahn (4b) auf dem Werkzeug (2) hat und die Regelungsvorrichtung (11) zum Regeln der Richtung der Anpresskraft derart eingerichtet ist, dass eine gleichmäßige Anpresskraftverteilung auf der Anpressrolle (10) erreicht wird.

6. Verfahren zum Herstellen eines Fasergeleges eines Faserverbundbauteils, bei dem Faserbahnen mittels eines Ablegekopfes auf einem Werkzeug abgelegt werden, mit
- Bereitstellen einer Faser-Legevorrichtung mit einem Werkzeug zum Ablegen von Faserbahnen und einem Ablegekopf, der zum Ablegen von Faserbahnen auf dem Werkzeug mit einer Anpresskraft ausgebildet ist,
- Erfassen der Richtung einer Ist-Anpresskraft, die beim Legen der Faserbahn **durch** den Ablegekopf auf die Faserbahn wirkt, **durch** eine Anpresskraft-Erfassungsvorrichtung der Faser-Legevorrichtung, und
- Regeln der Richtung der auf die Faserbahn wirkenden Anpresskraft beim Legen der Faserbahn in Abhängigkeit von der erfassten Richtung der Ist-Anpresskraft und der Richtung einer vorgegebenen Soll-Anpresskraft **durch** eine Regelungsvorrichtung der Faser-Legevorrichtung
**gekennzeichnet durch**
- Erfassung eines Neigungsmomentes des Ablegekopfes gegenüber der Oberfläche des Werkzeugs und Ermitteln der Richtung der Ist-Anpresskraft aus dem Neigungsmoment **durch** die Anpresskraft-Erfassungsvorrichtung.

7. Verfahren nach Anspruch 6, **gekennzeichnet durch** Erfassen der Stärke der Ist-Anpresskraft, die beim Legen der Faserbahn **durch** den Ablegekopf auf die Faserbahn wirkt, **durch** die Anpresskraft-Erfassungsvorrichtung und Regeln der Stärke der auf die Faserbahn wirkenden Anpresskraft beim Legen der Faserbahn in Abhängigkeit von der erfassten Stärke der Ist-Anpresskraft und der Stärke der vorgegebenen Soll-Anpresskraft **durch** die Regelungsvorrichtung.

8. Verfahren nach Anspruch 6 oder 7, **gekennzeichnet durch** Erfassen eines Neigungswinkels des Ablegekopfes gegenüber der Oberfläche des Werkzeugs und Ermitteln der Richtung der Ist-Anpresskraft aus dem Neigungswinkel **durch** die Anpresskraft-Erfassungsvorrichtung.

9. Verfahren nach einem der Ansprüche 6 bis 8, **gekennzeichnet durch** Regeln der Richtung der Anpresskraft derart, dass eine gleichmäßige Anpresskraftverteilung auf einer an dem Ablegekopf zum Legen der Faserbahn angeordneten Anpressrolle erreicht wird.

## Claims

1. Fibre laying apparatus (1) for producing a laid fibre fabric of a fibre composite component, having
- a tool (2) for laying down fibre webs (4a, 4b),
- a laying head (3) which is configured for laying fibre webs (4a, 4b) on the tool (2) with a pressing force,
- a pressing-force detecting apparatus (9) which is configured to detect the direction of an actual pressing force which acts on the fibre web (4b) during laying of the fibre web (4b) by way of the laying head (3), and
- a regulating apparatus (11) being provided which is configured to regulate the direction of the pressing force which acts on the fibre web (4b) during laying of the fibre web (4b) depending on the detected direction of the actual pressing force and the direction of a predefined setpoint pressing force,
**characterized in that**
- the pressing-force detecting apparatus (9) is set up to detect a tilting moment of the laying head (3) and to determine the direction of the actual pressing force from the detected tilting moment.

2. Fibre laying apparatus (1) according to Claim 1, **characterized in that** the pressing-force detecting apparatus (9) is configured to detect the magnitude of the actual pressing force which acts on the fibre web (4b) during laying of the fibre web (4b) by way of the laying head (3), and the regulating apparatus (11) is configured to regulate the magnitude of the pressing force which acts on the fibre web (4b) during laying of the fibre web (4b) depending on the detected magnitude of the actual pressing force and the predefined setpoint pressing force.

3. Fibre laying apparatus (1) according to Claim 2, **characterized in that** the laying head (3) has a pressing roller (10) for laying the fibre web (4b) on the tool (2), and at least one force sensor for detecting the magnitude of the actual pressing force is arranged between the pressing roller and the laying head (3).

4. Fibre laying apparatus (1) according to one of the preceding claims, **characterized in that** the pressing-force detecting apparatus (9) is set up to detect a tilting angle of the laying head (3) with respect to the surface of the tool (2) and to determine the direction of the actual pressing force from the detected tilting angle.

5. Fibre laying apparatus (1) according to one of the preceding claims, **characterized in that** the laying head (3) has a pressing roller (10) for laying the fibre web (4b) on the tool (2), and the regulating apparatus (11) is set up to regulate the direction of the pressing force in such a way that a homogeneous distribution of pressing force is achieved on the pressing roller (10).

6. Method for producing a laid fibre fabric of a fibre composite component, in which fibre webs are laid on a tool by means of a laying head, with
- provision of a fibre laying apparatus with a tool for laying down fibre webs and with a laying head which is configured to lay fibre webs down on the tool with a pressing force,
- detection of the direction of an actual pressing force which acts on the fibre web during laying of the fibre web by way of the laying head by way of a pressing-force detecting apparatus of the fibre laying apparatus, and
- regulation of the direction of the pressing force which acts on the fibre web during laying of the fibre web depending on the detected direction of the actual pressing force and the direction of a predefined setpoint pressing force by way of a regulating apparatus of the fibre laying apparatus,
**characterized by**
- detection of a tilting moment of the laying head with respect to the surface of the tool and determination of the direction of the actual pressing force from the tilting moment by way of the pressing-force detecting apparatus.

7. Method according to Claim 6, **characterized by** detection by way of the pressing-force detecting apparatus of the magnitude of the actual pressing force which acts on the fibre web during laying of the fibre web by way of the laying head, and regulation of the magnitude of the pressing force which acts on the fibre web during laying of the fibre web depending on the detected magnitude of the actual pressing force and the magnitude of the predefined setpoint pressing force by way of the regulating apparatus.

8. Method according to Claim 6 or 7, **characterized by** detection of a tilting angle of the laying head with respect to the surface of the tool and determination of the direction of the actual pressing force from the tilting angle by way of the pressing-force detecting apparatus.

9. Method according to one of Claims 6 to 8, **characterized by** regulation of the direction of the pressing force in such a way that a homogeneous distribution of pressing force is achieved on a pressing roller which is arranged on the laying head for laying the fibre web.

## Revendications

1. Dispositif de dépose de fibres (1) destiné à fabriquer une nappe de fibres d'un élément de construction composite renforcé par fibres, avec
- un outil (2) pour déposer des bandes de fibres (4a, 4b),
- une tête de dépose (3), qui pour déposer des bandes de fibres (4a, 4b) sur l'outil (2) est conçu avec une force de pression,
- un dispositif de détection (9) de la force de pression, qui est conçu pour détecter la direction d'une force de pression effective, qui lors de la dépose de la bande de fibres (4b) par la tête de dépose (3) agit sur la bande de fibres (4b) et
- il est prévu un dispositif de réglage (11) qui est conçu pour régler la direction de la force de pression agissant sur la bande de fibres (4b) lors de la dépose de la bande de fibres (4b), en fonction de la direction détectée de la force de pression effective et de la direction d'une force de pression de consigne prédéfinie,
**caractérisé en ce que**
- le dispositif de détection (9) de la force de pression est installé pour détecter un couple d'inclinaison de la tête de dépose (3) et pour déterminer la direction de la force de pression effective à partir du couple d'inclinaison détecté.

2. Dispositif de dépose de fibres (1) selon la revendication 1, **caractérisé en ce que** le dispositif de détection (9) de la force de pression est conçu pour détecter l'intensité de la force de pression effective, qui lors de la dépose de la bande de fibres (4b) par la tête de dépose (3) agit sur la bande de fibres (4b) et le dispositif de réglage (11) est conçu pour régler l'intensité de la force de pression agissant sur la bande de fibres (4b) lors de la dépose de la bande de fibres (4b) en fonction de l'intensité détectée de la force de pression effective et de la force de pression de consigne prédéfinie.

3. Dispositif de dépose de fibres (1) selon la revendication 2, **caractérisé en ce que** la tête de dépose (3) est dotée d'un rouleau presseur (10) pour déposer la bande de fibres (4b) sur l'outil (2) et **en ce qu'**au moins un détecteur de force pour détecter l'intensité de la force de pression effective est placé entre le rouleau presseur et la tête de dépose (3).

4. Dispositif de dépose de fibres (1) selon l'une quelconque des revendications précédentes, **caractérisé en ce que** le dispositif de détection (9) de la force de pression est aménagé pour détecter un angle d'inclinaison de la tête de dépose (3) par rapport à la surface de l' outil (2) et pour déterminer la direction de la force de pression effective à partir de l'angle d'inclinaison détecté.

5. Dispositif de dépose de fibres (1) selon l'une quelconque des revendications précédentes, **caractérisé en ce que** la tête de dépose (3) est dotée d'un rouleau presseur (10) pour déposer la bande de fibres (4b) sur l'outil (2) et **en ce que** le dispositif de réglage (11) est aménagé pour régler la direction de la force de pression de sorte à obtenir une distribution régulière de la force de pression sur le rouleau presseur (10).

6. Procédé destiné à fabriquer une nappe de fibres d'un élément de construction composite renforcé par fibres, lors duquel des bandes de fibres sont déposées sur un outil au moyen d'une tête de dépose, avec
- la mise à disposition d'un dispositif de dépose de fibres avec un outil, destiné à déposer des bandes de fibres et une tête de dépose qui est conçue pour déposer des bandes de fibres sur l'outil avec une force de pression,
- la détection par un dispositif de détection de la force de pression du dispositif de dépose de fibres de la direction d'une force de pression effective, qui lors de la dépose de la bande de fibres par la tête de dépose agit sur la bande de fibres et
- le réglage par un dispositif de réglage du dispositif de dépose de fibres de la direction de la force de pression agissant sur la bande de fibres lors de la dépose de la bande de fibres, en fonction de la direction détectée de la force de pression effective et de la direction d'une force de pression de consigne prédéfinie,
**caractérisé par**
- la détection par le dispositif de détection de la force de pression d'un couple d'inclinaison de la tête de dépose par rapport à la surface de l'outil et la détermination de la direction de la force de pression effective à partir du couple d'inclinaison.

7. Procédé selon la revendication 6, **caractérisé par** la détection par le dispositif de détection de la force de pression de l'intensité de la force de pression effective, qui lors de la dépose de la bande de fibres par la tête de dépose agit sur la bande de fibres et le réglage par le dispositif de réglage de l'intensité de la force de pression agissant sur la bande de fibres lors de la dépose de la bande de fibres, en fonction de l'intensité détectée de la force de pression effective et de l'intensité de la force de pression de consigne prédéfinie.

8. Procédé selon la revendication 6 ou la revendication 7, **caractérisé par** la détection par le dispositif de détection de la force de pression d'un angle d'inclinaison de la tête de dépose par rapport à la surface de l'outil et la détermination de la direction de la force de pression effective à partir de l'angle d'inclinaison.

9. Procédé selon l'une quelconque des revendications 6 à 8, **caractérisé par** le réglage de la direction de la force de pression, de sorte à obtenir une distribution régulière de la force de pression sur un rouleau presseur placé sur la tête de dépose pour déposer la bande de fibres.
